# EUROPEAN PATENT SPECIFICATION

(11) **EP 3 453 683 B1**
(45) Date of publication and mention of the grant of the patent: **06.11.2024**
(21) Application number: 16913311.3
(22) Date of filing: 08.09.2016
(51) Int. Cl.: C03B 7/06, C03B 5/235

(54) **METHOD FOR HEATING LIQUID GLASS CHANNEL OF GLASS FIBER TANK FURNACE**
VERFAHREN ZUR ERWÄRMUNG EINES FLÜSSIGKEITSGLASKANAL EINES GLASFASERWANNENOFENS
PROCÉDÉ DE CHAUFFAGE D'UN CANAL DE VERRE LIQUIDE D'UN FOUR À CUVE POUR FIBRES DE VERRE

(30) Priority: 19.08.2016 CN 201610695498
(43) Date of publication of application: 13.03.2019
(73) Proprietor: Jushi Group Co., Ltd., Tongxiang, Zhejiang 314500 (CN)
(72) Inventor: SHEN, Peijun, Tongxiang Zhejiang 314500 (CN); ZHANG, Yuqiang, Tongxiang Zhejiang 314500 (CN); CAO, Guorong, Tongxiang Zhejiang 314500 (CN)
(74) Representative: dompatent von Kreisler Selting Werner - Partnerschaft von Patent- und Rechtsanwälten mbB
(86) International application number: PCT/CN2016/098470
(87) International publication number: WO 2018/032556

(56) References cited:
- CN-A- 101 108 766
- CN-A- 101 428 958
- CN-A- 102 730 938
- CN-A- 103 508 652
- CN-U- 2 050 038
- JP-A- 2016 117 608
- US-A- 4 986 748
- US-A- 5 833 447
- US-A1- 2015 128 647

## Description

The present application claims priority from Chinese Patent Application NO. 201610695498.7, filed on August 19, 2016 and entitled "Method for heating liquid glass channel of glass fiber tank furnace".

### FIELD OF THE INVENTION

The invention relates to glass melting technology, in particular, to a method for heating liquid glass channel of glass fiber tank furnace.

### BACKGROUND OF THE INVENTION

The glass fiber tank furnace comprises melting end and the channel, the melting end adopts oxy-fuel combustion technology, which has been applied in China and abroad. However, the channel still uses air combustion at present, or heats the air and fuel to about 1000 °C and then switches to oxy-fuel combustion.

Air combustion has the following problems: Firstly, the flame temperature of the air combustion is not high, the heat radiation capability is weak, and in the combustion process, a large amount of nitrogen in the air enters the channel and is discharged from the flue after absorbing a large amount of heat, thus leading to the low utilization efficiency of combustion heat and the growing production cost in fiberglass industry. Secondly, the accuracy of temperature control for air combustion is relatively poor, which leads to uneven temperature in the channel space and further results in uneven expansion of the refractory materials. This would easily affect the channel structure and has certain hidden danger. Thirdly, by using the air combustion technology, the ignition temperature is generally higher and the heating requirement of the channel under a low-temperature condition cannot be satisfied.

US4986748 A teaches a burner for a glass furnace whereby the velocity ratio of the fuel to oxygen is 2/1 to 4/1, i.e., D = 50-75%. Gas flow rates are up to 600 feet per second, which equals 182.88 m/s.

US5833447 A discloses glass furnace burners, for which the fuel velocity is 2-4 times the velocity of oxygen. Example fuel velocities in m/s are 44, 26, and 16. Example oxygen velocities in m/s are 16, 27, and 31.

US2015128647 A1 teaches glass furnace burners with a ratio of flow rates of oxygen and fuel of 1:1 - 1:20, and further limited to fluel flow rates of 40-300 feet per second (= 12.192-91.44 m/s) and oxygen flow rates of 3-100 feet per second (= 0.9144-30.48 m/s).

With the fierce competition in the fiberglass industry, the fuel prices are rising. In order to reduce the energy consumption and production cost, and to respond to the national requirement on energy conservation and emission reduction, the heating process of glass fiber tank furnace channel and the combustion methods of the normal production need to be changed. It is an inevitable trend to use oxy-fuel combustion technology for the channel, but there remain big problems in the oxy-fuel combustion for the channel, especially the technical problems such as inaccurate and uneven control of temperatures. If the flow rates of fuel and oxygen cannot be controlled properly, it may cause the flame to be too short or the temperature to be too high, which will damage the burner and refractory materials, and reduce the service life of the channel.

### SUMMARY OF THE INVENTION

The present invention aims to provide a method for heating liquid glass channel of glass fiber tank furnace that can solve the aforesaid problems. The method which uses a special burner to heat the channel space and liquid glass can not only improve the flame temperature and the utilization efficiency of heat, but also reduce waste gas generated and the heat brought away by the waste gas in the combustion process, thereby reducing the energy consumption and the cost of production, achieving the goal of energy conservation, emission reduction and environmental protection.

A method for heating a liquid glass channel of a glass fiber tank furnace is provided comprising: passing oxygen and fuel, via a burner 1, into a channel space 3 for combustion to heat the channel space 3 and liquid glass 2;
wherein a flow rate of the fuel is V_{F} and a flow rate of the oxygen is Vox and a relative velocity difference is D=(V_{F}-V_{OX})/V_{F}. A temperature of the channel is 0-1500°C, and the relative velocity difference expressed as D is greater than 25%.

Wherein, a range of the flow rate of the fuel expressed as V_{F} is 0-100m/s, and a range of the flow rate of the oxygen expressed as Vox is 0-10m/s.

Wherein, when the channel temperature is controlled to be greater than 0°C and less than or equal to 500°C, a range of the relative velocity difference expressed as D is controlled to be greater than 25% and less than or equal to 50%.

Wherein, when the channel temperature is controlled to be greater than 500°C and less than or equal to 1000°C, a range of the relative velocity difference expressed as D is controlled to be greater than 50% and less than or equal to 90%.

Wherein, when the channel temperature is controlled to be greater than 1000°C and less than or equal to 1500°C, a range of the relative velocity difference expressed as D is controlled to be greater than 90%.

Wherein, when the channel temperature is controlled to be greater than 0°C and less than or equal to 500°C, a range of the flow rate of the fuel expressed as V_{F} is controlled to be greater than 0% and less than or equal to 15m/s.

Wherein, when the channel temperature is controlled to be greater than 500°C and less than or equal to 1000°C, a range of the flow rate of the fuel expressed as V_{F} is controlled to be greater than 15m/s and less than or equal to 50m/s.

Wherein, when the channel temperature is controlled to be greater than 1000°C and less than or equal to 1500°C, a range of the flow rate of the fuel expressed as V_{F} is controlled to be greater than 50m/s and less than or equal to 100m/s.

Wherein, when the channel temperature is greater than 0°C and less than or equal to 500°C, a range of the relative velocity difference expressed as D is controlled to be greater than 25% and less than or equal to 50%, and a range of the flow rate of the fuel expressed as V_{F} is controlled to be greater than 0m/s and less than or equal to 15m/s; when the channel temperature is greater than 500°C and less than or equal to 1000°C, the range of the relative velocity difference expressed as D is controlled to be greater than 50% and less than or equal to 90%, and the range of the flow rate of the fuel expressed as V_{F} is controlled to be greater than 15m/s and less than or equal to 50m/s; when the channel temperature is greater than 1000°C and less than or equal to 1500°C, the range of the relative velocity difference expressed as D is controlled to be greater than 90%, and the range of the flow rate of the fuel expressed as V_{F} is controlled to be greater than 50m/s and less than or equal to 100m/s.

Wherein, a range of a flame temperature is 1000-1800°C.

The combustion at the melting end of tank furnace is mainly to heat the glass raw materials and melt glass into molten glass, yet the heating of liquid glass channel is to keep the liquid state of the molten glass, and adjust the properties such as viscosity of molten glass. The quality of molten glass in the channel has a great influence on the subsequent operation of forming glass fiber. Thereby, the heating method of the channel has higher requirement for temperature uniformity. According to the method for heating liquid glass channel of the present invention, mainly by controlling the relative velocity difference of fuel and oxygen in the combustion process, it can maintain the temperature uniformity of the channel at different temperatures, significantly improve the heat radiation capability and the heat utilization efficiency, reduce heat loss, and have advantages such as energy conservation and environmental protection.

Specifically, oxygen and fuel are fed into channel space via a burner for combustion to heat the channel space and liquid glass. In present invention, the fuel includes combustible materials such as natural gas or liquefied petroleum gas; the flow rate of the fuel is V_{F}, the flow rate of the oxygen is Vox, and the relative velocity difference D=(V_{F}-V_{OX})/V_{F}. According to the present invention, oxygen is used as combustion-supporting gas to effectively compensate for the disadvantages of air combustion, such as low flame temperature and weak heat radiation capability, and further avoid the heating of nitrogen in air, so as to effectively improve heat utilization efficiency.

The heating method of the present invention is suitable for the channel temperature of 0-1500°C. Specifically, the channel temperature can be heated from normal temperature to 1500°C. The present invention adopts the method using fuel and oxygen for combustion and deeply studies the oxy-fuel combustion technology of the channel. It is essential to control the relative velocity of fuel and oxygen for this technology. In the present invention, the range of the relative velocity difference expressed as D should be greater than 25%. If the relative velocity difference expressed as D is less than 25%, the fuel flow will be relatively low and the oxygen flow will be relatively high, that will cause short flame of burner, high temperature of burner outlet, low heat radiation, low heat utilization efficiency and big heat loss.

Wherein, the restricted range of the flow rate of the fuel expressed as V_{F} is 0-100m/s, which can not only meet the different temperature requirements of the channel, but also maintain the proper flame length. The flow rate of the fuel being too high will easily cause too long combustion flame, which would easily burn the refractory materials and cause the local temperature of the refractory materials to be too high and further result in cracking of refractory materials. Meanwhile, considering the combustion reaction of fuel and oxygen in the channel, the restricted range of the flow rate of the oxygen expressed as Vox is 0-10 m/s.

Furthermore, different channel temperatures need different relative velocity differences. When the channel temperature is greater than 0°C and less than or equal to 500°C, that is, the channel temperature is relatively low, in order to maintain the uniformity of the channel temperature it is necessary to control the relative velocity of oxygen and fuel. Under this situation, as the channel temperature is relatively low, the gas flow in the burner is relatively low, and the flow rate of fuel is relatively low. In order to maintain the uniformity of the channel temperature, the range of the relative velocity difference expressed as D is controlled to be greater than 25% and less than or equal to 50%.

Furthermore, the inventors have found that, when the channel temperature is greater than 0°C and less than or equal to 500°C, it would be more energy efficient for the range of the flow rate of the fuel expressed as V_{F} to be controlled greater than 0m/s and less than or equal to 15m/s,. Preferably, when the channel temperature is less than or equal to 500°C, the range of the relative velocity difference expressed as D can be controlled to be greater than 25% and less than or equal to 50%, and the range of the flow rate of the fuel expressed as V_{F} to be greater than 0m/s and less than or equal to 15m/s, which can not only heat the liquid glass channel effectively and maintain uniformity of the temperature, but also can significantly improve the heat utilization efficiency.

When the channel temperature is greater than 500°C and less than or equal to 1000°C, in order to maintain the uniformity of the channel temperature, the range of the relative velocity difference expressed as D is controlled to be greater than 50% and less than or equal to 90%. Under this situation, the flame length of the burner just covers the width direction of the channel, and the flame will not burn the refractory materials opposite to it or cause the refractory materials to be damaged due to the uneven heating.

Furthermore, the inventors have found that, when the channel temperature is greater than 500°C and less than or equal to 1000°C, the range of the flow rate of the fuel expressed as V_{F} is controlled to be greater than 15m/s and less than or equal to 50m/s, which can be more energy efficient, save the consumption of materials and help achieve stable combustion. Preferably, when the channel temperature is greater than 500°C and less than or equal to 1000°C, the range of the relative velocity difference expressed as D is controlled to be greater than 50% and less than or equal to 90%, and the range of the flow rate of the fuel expressed as V_{F} is controlled to be greater than 15m/s and less than or equal to 50m/s. These controlling measures can significantly improve the heat radiation capability and heat utilization efficiency, reduce heat loss, and provide high accuracy of combustion control.

When the channel temperature is greater than 1000°C and less than or equal to 1500°C, in order to achieve a higher temperature of the channel, the burning velocity of the fuel need to be relatively higher. On the other hand, to prevent excess large flame from burning refractory materials, the range of the relative velocity difference of the fuel and the oxygen expressed as D is controlled to be greater than 90%, and the relative velocity difference is controlled to be greater than 90%, so that the temperature of the channel can quickly reach the production temperature.

Furthermore, the inventors have found that, when the channel temperature is greater than 1000°C and less than or equal to 1500°C, the range of the flow rate of the fuel expressed as V_{F} is controlled to be greater than 50m/s and less than or equal to 100m/s. This flow rate of the fuel can meet the requirement of fast combustion and maintain the channel temperature at a high level. Preferably, when the channel temperature is greater than 1000°C and less than or equal to 1500°C, the range of the relative velocity difference expressed as D is controlled to be greater than 90%, and the range of the flow rate of the fuel expressed as V_{F} is controlled to be greater than 50m/s and less than or equal to 100m/s. These controlling measures can effectively prevent the flame of the burner from being too short or too large, thereby avoiding burning the burner or the refractory materials, and offering high accuracy of combustion control and better uniformity of the channel temperature.

The oxy-fuel combustion has technical problems such as inaccurate and unevenness control of temperature due to the high concentration of oxygen. The present invention adopts grading control for the flow rate of the fuel and the relative velocity difference of fuel and oxygen according to different channel temperatures.

Specifically, when the channel temperature is greater than 0°C and less than or equal to 500°C, the range of the relative velocity difference expressed as D is controlled to be greater than 25% and less than or equal to 50%, and the range of the flow rate of the fuel expressed as V_{F} is controlled to be greater than 0m/s and less than or equal to 15m/s; when the channel temperature is greater than 500°C and less than or equal to 1000°C, the range of the relative velocity difference expressed as D is controlled to be greater than 50% and less than or equal to 90%, and the range of the flow rate of the fuel expressed as V_{F} is controlled to be greater than 15m/s and less than or equal to 50m/s; when the channel temperature is greater than 1000°C and less than or equal to 1500°C, the range of the relative velocity difference expressed as D is controlled to be greater than 90%, and the range of the flow rate of the fuel expressed as V_{F} is controlled to be greater than 50m/s and less than or equal to 100m/s. This combustion method simultaneously restricts the relative velocity difference expressed as D and the flow rate of the fuel expressed as V_{F} according to the channel temperature, and achieves accurate control of the channel temperature. This method used to heat the channel can effectively prevent the flame from being too short or too long, provide better uniformity temperature of the channel, and significantly improve the heat utilization efficiency of combustion.

In the present invention, by controlling the rate of the fuel and the relative velocity difference of the fuel and the oxygen, the flame temperature of the combustion can be as high as 1000-1800°C, and the combustion has high emissivity of flame, strong radiation capability and high heat utilization efficiency.

Compared with the prior art, the present invention has the following beneficial effects:
First, the combustion method provided in the present invention uses fuel and oxygen for combustion, and studies the relative velocity relationship of the fuel and the oxygen, which effectively compensates for various defects in air combustion and increases flame temperature and heat utilization efficiency.

Secondly, the present invention adopts grading control for the relative velocity difference expressed as D and the flow rate of the fuel expressed as V_{F} according to the different channel temperatures, which realizes accurate control of different channel temperatures.

Thirdly, the combustion method provided in the present invention enables the temperature of the channel to quickly reach the target temperature, maintains uniformity of the temperature, and reduces energy consumption and cost of production, thereby achieving the goal of energy conservation, emission reduction and environmental protection.

### BRIEF DESCRIPTION OF THE DRAWINGS

The accompanying drawings incorporated into the description and constituting part of the description show the embodiments of the present invention, and are used to explain the principle of the present invention together with the description. In these drawings, similar reference numbers are used to denote similar elements. The drawings described below show some but not all of the embodiments of the present invention. For a person of ordinary skill in the art, other drawings can be obtained according to these drawings without paying any creative effort.

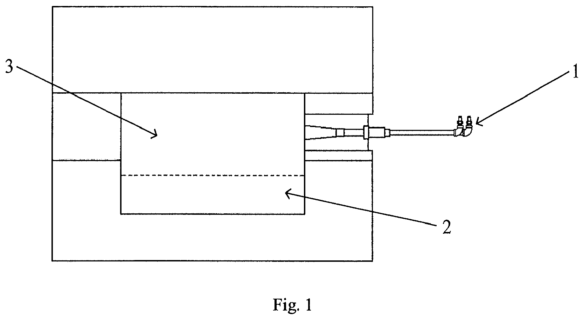

FIG 1 is a schematic diagram of a liquid glass channel structure according to the present disclosure.

### DETAILED DESCRIPTION OF THE INVENTION

In order to better clarify the purposes, technical solutions and advantages of the examples of the present invention, the technical solutions in the examples of the present invention are clearly and completely described below in combination with the drawings in the examples. Obviously, the examples described herein are just part of the examples of the present invention and are not all the examples.

### Embodiment 1

In actual production, the channel temperature is maintained at 1400°C for a long time. Then at this temperature, the heating method of the present invention is compared with the traditional air heating method. Referring to Figure 1, passing the oxygen and the fuel, with a certain velocity, via a burner 1, into a channel space 3 for combustion to heat the channel space 3 and liquid glass 2 in the channel; wherein the flow rate of the fuel is V_{F} and the flow rate of the oxygen is Vox, the relative velocity difference is D=(V_{F}-V_{OX})/V_{F}. The amounts of fuel consumed for per kilogram of molten glass by adopting different heating methods are shown in Table 1:

**Table 1 Fuel consumption by adopting different heating methods**

| No. | Channel temperature /°C | Relative velocity difference D | Flow rate of the fuel / ( m/s ) | Flow rate of the oxygen/ ( m/s ) | Fuel consumption / ( Nm³/ Kilogram of molten glass ) |
|---|---|---|---|---|---|
| 1 | 1400 | 86.1 % | 65 | 9 | 0.018 |
| 2 | 1400 | 92% | 50 | 4 | 0.022 |
| 3 | 1400 | 91% | 100 | 9 | 0.01 |
| Air combustion | 1400 | - | - | - | 0.09 |

When the channel temperature is maintained at 1400°C, the fuel consumption of air combustion is 0.09Nm³/ Kilogram of molten glass, the fuel consumption of the combustion method numbered 1-3 in Table 1 are 0.018 Nm³/ Kilogram of molten glass, 0.022 Nm³/ Kilogram of molten glass and 0.01Nm³/ Kilogram of molten glass, respectively. The combustion method provided in present invention greatly reduces the energy consumption, effectively improves the heat utilization efficiency by controlling the relative velocity of the fuel and the oxygen. Wherein, the combustion method numbered 3 in Table 1 has the lowest energy consumption.

### Embodiment 2

Referring to Figure 1, passing the oxygen and the fuel, with a certain velocity, via a burner 1, into a channel space 3 for combustion to heat the channel space 3 and the liquid glass 2 in the channel; wherein the flow rate of the fuel is V_{F} and the flow rate of the oxygen is Vox such that the relative velocity difference is D=(V_{F}-V_{OX})/V_{F}. Table 2 shows the flow rates of the fuel and the oxygen at different channel temperatures.

**Table 2 Channel temperatures and the related combustion parameters**

| No. | Channel temperature /°C | Relative velocity difference D | Flow rate of the fuel / ( m/s ) | Flow rate of the oxygen / ( m/s ) |
|---|---|---|---|---|
| 1 | 300 | 54.5% | 5.5 | 2.5 |
| 2 | 400 | 40.6% | 16 | 9.5 |
| 3 | 500 | 37.5% | 4 | 2.5 |
| 4 | 600 | 74.3 | 14 | 3.6 |
| 5 | 800 | 91% | 40 | 3.6 |
| 6 | 1000 | 77.1% | 35 | 8 |
| 7 | 1100 | 92% | 50 | 4 |
| 8 | 1300 | 90% | 90 | 9 |
| 9 | 1500 | 91% | 100 | 9 |

The combustion methods numbered 1-9 in Table 2, by controlling the relative velocity of the oxygen and the fuel, enable the temperature of the channel to quickly reach the target temperature, have good uniformity of the temperature, and have the flame temperature as high as 1000-1800°C, have strong radiation capability, effectively improve the heat utilization efficiency, and reduce the heat loss.

Wherein , the methods numbered 3, 6 and 9 can control the channel temperature more accurately and achieve better uniformity of the channel temperature.

It can be seen from the above tables that, compared with the prior art, the present invention has the following beneficial effects:
First, the combustion method provided in the present invention uses fuel and oxygen for combustion, and studies the relative velocity relationship of the fuel and the oxygen, which effectively compensates for various defects in air combustion and improves the flame temperature and heat utilization efficiency.

Secondly, the present invention adopts grading control for the relative velocity difference expressed as D and the flow rate of the fuel expressed as V_{F} according to the different channel temperatures, which realizes the accurate control of different channel temperatures.

Thirdly, the combustion method provided in the present invention enables the temperature of the channel to quickly reach the target temperature, maintains uniformity of the temperature, reduces the energy consumption and cost of production, thereby achieving the goal of energy conservation, emission reduction and environmental protection.

Finally, what should be made clear is that, in this text, the terms "contain", "comprise" or any other variants are intended to mean "nonexclusively include" so that any process, method, article or equipment that contains a series of factors shall include not only such factors, but also include other factors that are not explicitly listed, or also include intrinsic factors of such process, method, object or equipment. Without more limitations, factors defined by the phrase "contain a..." or its variants do not rule out that there are other same factors in the process, method, article or equipment which include said factors.

The above examples are provided only for the purpose of illustrating instead of limiting the technical solutions of the present invention. Although the present invention is described in details by way of aforementioned examples, one skilled in the art shall understand that modifications can also be made to the technical solutions embodied by all the aforementioned examples.

### INDUSTRIAL APPLICABILITY OF THE INVENTION

The present invention adopts oxy-fuel combustion to heat the liquid glass channel of the tank furnace, studies the relative velocity relationship of the fuel and the oxygen. By controlling the relative velocity difference of the fuel and the oxygen expressed as D and the flow rate of the fuel expressed as V_{F}, it can realize the accurate control of different channel temperatures, enable the temperature of the channel to quickly reach the target temperature, maintain uniformity of the temperature, reduce the energy consumption and cost of production, thereby achieving the goal of energy conservation, emission reduction and environmental protection.

## Claims

1. A method for heating a liquid glass channel of a glass fiber tank furnace, comprising:
passing oxygen and fuel, via a burner (1), into a channel space (3) for combustion to heat the channel space (3) and liquid glass (2);
wherein a flow rate of the fuel is V_{F}, a flow rate of the oxygen is Vox, a relative velocity difference is D=((V_{F}-V_{OX})/V_{F})×100%, a temperature of the channel is greater than 0°C and less than or equal to 1500°C, and the relative velocity difference expressed as D is greater than 25%;
wherein, a range of the flow rate of the fuel expressed as V_{F} is greater than 0m/s and less than or equal to 100m/s, and a range of the flow rate of the oxygen expressed as Vox is greater than 0m/s and less than or equal to 10m/s;
wherein grading control for the relative velocity difference expressed as D and the flow rate of the fuel expressed as V_{F} according to the different channel temperatures is adopted;
wherein, when the channel temperature is controlled to be greater than 0°C and less than or equal to 500°C, a range of the relative velocity difference expressed as D is controlled to be greater than 25% and less than or equal to 50%;
wherein, when the channel temperature is controlled to be greater than 500°C and less than or equal to 1000°C, a range of the relative velocity difference expressed as D is controlled to be greater than 50% and less than or equal to 90%;
wherein, when the channel temperature is controlled to be greater than 1000°C and less than or equal to 1500°C, a range of the relative velocity difference expressed as D is controlled to be greater than 90%.

2. The method for heating liquid glass channel of glass fiber tank furnace of claim 1, wherein, when the channel temperature is controlled to be greater than 0°C and less than or equal to 500°C, a range of the flow rate of the fuel expressed as V_{F} is controlled to be greater than 0m/s and less than or equal to 15m/s.

3. The method for heating liquid glass channel of glass fiber tank furnace of claim 1, wherein, when the channel temperature is controlled to be greater than 500°C and less than or equal to 1000°C, a range of the flow rate of the fuel expressed as V_{F} is controlled to be greater than 15m/s and less than or equal to 50m/s.

4. The method for heating liquid glass channel of glass fiber tank furnace of claim 1, wherein, when the channel temperature is controlled to be greater than 1000°C and less than or equal to 1500°C, a range of the flow rate of the fuel expressed as V_{F} is controlled to be greater than 50m/s and less than or equal to 100m/s.

5. The method for heating liquid glass channel of glass fiber tank furnace of claim 1, wherein, when the channel temperature is greater than 0°C and less than or equal to 500°C, a range of the relative velocity difference expressed as D is controlled to be greater than 25% and less than or equal to 50%, and a range of the flow rate of the fuel expressed as V_{F} is controlled to be greater than 0m/s and less than or equal to 15m/s; when the channel temperature is greater than 500°C and less than or equal to 1000°C, the range of the relative velocity difference expressed as D is controlled to be greater than 50% and less than or equal to 90%, and the range of the flow rate of the fuel expressed as V_{F} is controlled to be greater than 15m/s and less than or equal to 50m/s; when the channel temperature is greater than 1000°C and less than or equal to 1500°C, the range of the relative velocity difference expressed as D is controlled to be greater than 90%, and the range of the flow rate of the fuel expressed as V_{F} is controlled to be greater than 50m/s and less than or equal to 100m/s.

6. The method for heating liquid glass channel of glass fiber tank furnace of claim 1, wherein a range of a flame temperature is 1000-1800°C.

## Patentansprüche

1. Verfahren zum Erhitzen eines Flüssigglaskanals eines Glasfaserwannenofens, umfassend: das Leiten von Sauerstoff und Brennstoff über einen Brenner (1) in einen Kanalraum (3) zur Verbrennung, um den Kanalraum (3) und das flüssige Glas (2) zu erhitzen;
wobei die Strömungsgeschwindigkeit des Brennstoffs V_{F} beträgt, wobei die Strömungsgeschwindigkeit des Sauerstoffs Vox beträgt, die relative Geschwindigkeitsdifferenz D = ((V_{F}-V_{OX})/V_{F}) × 100% beträgt, die Temperatur des Kanals größer als 0°C und kleiner oder gleich 1500°C ist und die als D ausgedrückte relative Geschwindigkeitsdifferenz größer als 25% ist;
wobei der Bereich der als V_{F} ausgedrückten Strömungsgeschwindigkeit des Brennstoffs größer als 0 m/s und kleiner oder gleich 100 m/s ist und der Bereich der als Vox ausgedrückten Strömungsgeschwindigkeit des Sauerstoffs größer als 0 m/s und kleiner oder gleich 10 m/s ist;
wobei eine abgestufte Steuerung für die als D ausgedrückte relative Geschwindigkeitsdifferenz und die als V_{F} ausgedrückte Strömungsgeschwindigkeit des Brennstoffs gemäß den verschiedenen Kanaltemperaturen eingesetzt wird;
wobei dann, wenn die Kanaltemperatur so gesteuert wird, dass sie größer als 0°C und kleiner oder gleich 500°C ist, der Bereich der als D ausgedrückten relativen Geschwindigkeitsdifferenz so gesteuert wird, dass sie größer als 25% und kleiner oder gleich 50% ist;
wobei dann, wenn die Kanaltemperatur so gesteuert wird, dass sie größer als 500°C und kleiner oder gleich 1000°C ist, der Bereich der als D ausgedrückten relativen Geschwindigkeitsdifferenz so gesteuert wird, dass sie größer als 50% und kleiner oder gleich 90% ist;
wobei dann, wenn die Kanaltemperatur so gesteuert wird, dass sie größer als 1000°C und kleiner oder gleich 1500°C ist, der Bereich der als D ausgedrückten relativen Geschwindigkeitsdifferenz so gesteuert wird, dass sie größer als 90% ist.

2. Verfahren zum Erhitzen eines Flüssigglaskanals eines Glasfaserwannenofens gemäß Anspruch 1, wobei dann, wenn die Kanaltemperatur so gesteuert wird, dass sie größer als 0°C und kleiner oder gleich 500°C ist, der Bereich der als V_{F} ausgedrückten Strömungsgeschwindigkeit des Brennstoffs so gesteuert wird, dass sie größer als 0 m/s und kleiner oder gleich 15 m/s ist.

3. Verfahren zum Erhitzen eines Flüssigglaskanals eines Glasfaserwannenofens gemäß Anspruch 1, wobei dann, wenn die Kanaltemperatur so gesteuert wird, dass sie größer als 500°C und kleiner oder gleich 1000°C ist, der Bereich der als V_{F} ausgedrückten Strömungsgeschwindigkeit des Brennstoffs so gesteuert wird, dass sie größer als 15 m/s und kleiner oder gleich 50 m/s ist.

4. Verfahren zum Erhitzen eines Flüssigglaskanals eines Glasfaserwannenofens gemäß Anspruch 1, wobei dann, wenn die Kanaltemperatur so gesteuert wird, dass sie größer als 1000°C und kleiner oder gleich 1500°C ist, der Bereich der als V_{F} ausgedrückten Strömungsgeschwindigkeit des Brennstoffs so gesteuert wird, dass sie größer als 50 m/s und kleiner oder gleich 100 m/s ist.

5. Verfahren zum Erhitzen eines Flüssigglaskanals eines Glasfaserwannenofens gemäß Anspruch 1, wobei dann, wenn die Kanaltemperatur größer als 0°C und kleiner oder gleich 500°C ist, der Bereich der als D ausgedrückten relativen Geschwindigkeitsdifferenz so gesteuert wird, dass sie größer als 25% und kleiner oder gleich 50% ist, und der Bereich der als V_{F} ausgedrückten Strömungsgeschwindigkeit des Brennstoffs so gesteuert wird, dass sie größer als 0 m/s und kleiner oder gleich 15 m/s ist; dann, wenn die Kanaltemperatur größer als 500°C und kleiner oder gleich 1000°C ist, der Bereich der als D ausgedrückten relativen Geschwindigkeitsdifferenz so gesteuert wird, dass sie größer als 50% und kleiner oder gleich 90% ist, und der Bereich der als V_{F} ausgedrückten Strömungsgeschwindigkeit des Brennstoffs so gesteuert wird, dass sie größer als 15 m/s und kleiner oder gleich 50 m/s ist; dann, wenn die Kanaltemperatur größer als 1000°C und kleiner oder gleich 1500°C ist, der Bereich der als D ausgedrückten relativen Geschwindigkeitsdifferenz so gesteuert wird, dass sie größer als 90% ist, und der Bereich der als V_{F} ausgedrückten Strömungsgeschwindigkeit des Brennstoffs so gesteuert wird, dass sie größer als 50 m/s und kleiner oder gleich 100 m/s ist.

6. Verfahren zum Erhitzen eines Flüssigglaskanals eines Glasfaserwannenofens gemäß Anspruch 1, wobei der Bereich der Flammentemperatur 1000-1800°C beträgt.

## Revendications

1. Procédé pour chauffer un canal à verre liquide d'un fourneau de cuve de fibre optique, comprenant les étapes consistant à : faire passer de l'oxygène et du carburant par un brûleur (1) dans un espace de canal (3) pour combustion, pour chauffer ledit espace de canal (3) et le verre liquide (2),
où la vitesse de débit du carburant est V_{F}, la vitesse de débit de l'oxygène est Vox, la différence relative des débits est D = ((V_{F}-V_{OX})/V_{F}) × 100 %, la température du canal est supérieure à 0°C et inférieure ou égale à 1500°C, et la différence relative des débits exprimée par D est supérieure à 25 %,
dans lequel la gamme des vitesses de débit du carburant exprimées par V_{F} est supérieures à 0 m/s et inférieures ou égales à 100 m/s, et la gamme des vitesses de débit de l'oxygène exprimées par Vox est supérieures à 0 m/s et inférieures ou égales à 10 m/s,
dans lequel une commande de gradation pour la différence relative des débits exprimée par D et la vitesse de débit du carburant exprimée par V_{F} selon les températures de canal différentes est utilisée,
où, lorsque la température de canal est commandée à être supérieure à 0°C et inférieure ou égale à 500°C, la gamme des différences relatives des débits exprimées par D est commandée à être supérieure à 25 % et inférieure ou égale à 50 %,
où, lorsque la température de canal est commandée à être supérieure à 500°C et inférieure ou égale à 1000°C, la gamme des différences relatives des débits exprimées par D est commandée à être supérieure à 50 % et inférieure ou égale à 90 %,
où, lorsque la température de canal est commandée à être supérieure à 1000°C et inférieure ou égale à 1500°C, la gamme des différences relatives des débits exprimées par D est commandée à être supérieure à 90 %.

2. Procédé pour chauffer un canal à verre liquide d'un fourneau de cuve de fibre optique selon la revendication 1, dans lequel, lorsque la température de canal est commandée à être supérieure à 0°C et inférieure ou égale à 500°C, la gamme des vitesses de débit du carburant exprimées par V_{F} est supérieures à 0 m/s et inférieures ou égales à 15 m/s.

3. Procédé pour chauffer un canal à verre liquide d'un fourneau de cuve de fibre optique selon la revendication 1, dans lequel, lorsque la température de canal est commandée à être supérieure à 500°C et inférieure ou égale à 1000°C, la gamme des vitesses de débit du carburant exprimées par V_{F} est supérieures à 15 m/s et inférieures ou égales à 50 m/s.

4. Procédé pour chauffer un canal à verre liquide d'un fourneau de cuve de fibre optique selon la revendication 1, dans lequel, lorsque la température de canal est commandée à être supérieure à 1000°C et inférieure ou égale à 1500°C, la gamme des vitesses de débit du carburant exprimées par V_{F} est supérieures à 50 m/s et inférieures ou égales à 100 m/s.

5. Procédé pour chauffer un canal à verre liquide d'un fourneau de cuve de fibre optique selon la revendication 1, dans lequel, lorsque la température de canal est supérieure à 0°C et inférieure ou égale à 500°C, la gamme des différences relatives des débits exprimées par D est commandée à être supérieure à 25 % et inférieure ou égale à 50 %, et la gamme des vitesses de débit du carburant exprimées par V_{F} est commandée à être supérieures à 0 m/s et inférieures ou égales à 15 m/s, lorsque la température de canal est supérieure à 500°C et inférieure ou égale à 1000°C, la gamme des différences relatives des débits exprimées par D est commandée à être supérieure à 50 % et inférieure ou égale à 90 %, et la gamme des vitesses de débit du carburant exprimées par V_{F} est commandée à être supérieures à 15 m/s et inférieures ou égales à 50 m/s, lorsque la température de canal est supérieure à 1000°C et inférieure ou égale à 1500°C, la gamme des différences relatives des débits exprimées par D est commandée à être supérieure à 90 %, et la gamme des vitesses de débit du carburant exprimées par V_{F} est commandée à être supérieures à 50 m/s et inférieures ou égales à 100 m/s.

6. Procédé pour chauffer un canal à verre liquide d'un fourneau de cuve de fibre optique selon la revendication 1, dans lequel, la gamme des températures de flamme est de 1000-1800°C.
